## Europäisches Patentamt

## European Patent Office

## Office européen des brevets

(11) Veröffentlichungsnummer: **0 151 707**
**B1**

(12)

# EUROPÄISCHE PATENTSCHRIFT

(45) Veröffentlichungstag der Patentschrift:
**12.10.88**

(21) Anmeldenummer: **84113980.1**

(22) Anmeldetag: **19.11.84**

(51) Int. Cl.⁴: **C 08 L 67/02 //**
**(C08L67/02, C08G63:76)**

(54) **Formmassen auf Basis von hochmolekularen Poly(alkylenterephthalaten).**

(30) Priorität: **17.01.84 DE 3401345**

(43) Veröffentlichungstag der Anmeldung:
**21.08.85 Patentblatt 85/34**

(45) Bekanntmachung des Hinweises auf die Patenterteilung:
**12.10.88 Patentblatt 88/41**

(84) Benannte Vertragsstaaten:
**DE FR GB IT**

(56) Entgegenhaltungen:
**DE-A-2 711 148**
**US-A-4 022 752**

(73) Patentinhaber: **HÜLS AKTIENGESELLSCHAFT, - RSP Patente / PB 15 - Postfach 13 20, D-4370 Marl 1 (DE)**

(72) Erfinder: **Dröscher, Michael, Dr., Hetkerbruch 34, D-4270 Dorsten 11 (DE)**
Erfinder: **Bruzin, Klaus, Dr., Wellerfeldweg 164, D-4370 Marl (DE)**
Erfinder: **Gerth, Christian, Dr., In der Thiebrei 80, D-4348 Haltern (DE)**
Erfinder: **Heuer, Horst, An der Landwehr 76, D-4358 Haltern (DE)**

EP 0 151 707 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Gegenstand der Erfindung sind Formmassen auf Basis von hochmolekularen Poly(alkylenterephthalaten) mit einer Viskositätszahl J von >80 cm$^3$/g.

Poly(ethyienterephthalat) mit einer Viskositätszahl von <75 cm$^3$/g kann in einfacher Weise hergestellt und verarbeitet werden. Das gleiche gilt für Poly(butylenterephthalat) mit einer Viskositätszahl von <120 cm$^3$/g. Für eine Reihe von Verarbeitungsverfahren sind jedoch Polyester mit höheren Viskositätszahlen erforderlich. Derartige Produkte erfordern einen deutlich erhöhten Herstellungsaufwand.

Es ist bekannt, höhermolekulare Poly(alkylenterephthalate) durch Festphasennachkondensation aus Produkten mit geringerem Molekulargewicht herzustellen (DE-C-3 033 468 und DE-C-3 033 469). Allerdings ist ein zeit- und energieaufwendiges Verfahren notwendig. Die Verarbeitbarkeit daraus hergestellter Formmassen wird nicht verbessert.

Außerdem ist bekannt, daß ein Molekulargewichtsanstieg bei Polyestern durch Vernetzungsreaktionen mit bifunktionellen Verbindungen, wie z. B. difunktionellen Isocyanaten, während der Verarbeitung erreicht werden kann. So beschreibt EP-B-0 056 293 ein Verfahren, Poly(ethylenterephthalat) oder Polymermischungen auf Basis von Poly(ethylenterephthalat) mit organischen Diisocyanaten vorzumischen und in einem Zweischneckenextruder mit Entgasungszone, die auf eine Temperatur zwischen 280°C und 320°C geheizt wird, zu verarbeiten. Allerdings neigen Formmassen, die nach der Lehre der EP-B-0 056 293 mit aromatischen Diisocyanaten hergestellt werden, zur Verfärbung. Aliphatische oder cycloaliphatische Diisocyanate, die keine Verfärbung verursachen, sind, verglichen mit den aromatischen Diisocyanaten, bedeutend weniger reaktiv und deutlich toxischer.

In US-A-4 022 752 werden Iso(thio)cyanate und Carbodiimide als Cokomponenten für Poly(butylenterephthalate) beschrieben. Definitionsgemäß kommt eine unübersehbare Vielzahl von Verbindungen als Cokomponenten infrage. Als bevorzugte Substanzklasse werden in den Beispielen difunktionelle, geblockte, insbesondere aromatische, Isocyanate eingesetzt.

Entsprechend den Darstellungen des Standes der Technik führen aromatische Isocyanate als Cokomponente leicht zu verfärbten Produkten, bzw. sie neigen aufgrund ihrer überaus hohen Reaktivität dazu, vergelte Endprodukte zu ergeben.

Aufgabe der Erfindung war es, Formmassen auf Basis von Poly(alkylenterephthalaten) aufzufinden, die untoxisch sind und trotz hohen Molekulargewichtes (Viskositätszahl J >80 cm$^3$/g) problemlos zu verarbeiten sind und nicht zur Vernetzung neigen.

Die Aufgabe wurde durch Formmassen gelöst, die aus einer Mischung von

A. Poly(alkylenterephthalat) mit einer Viskositätszahl J von mindestens 50 cm$^3$/g

und

B. 0,05 bis 2,5 Gew.-Teilen - bezogen auf 100 Gew.-Teile der Formmasse eines cyclischem, trimerisierten Isophorondiisocyanat oder einem Oligomeren davon mit einem Oligomerisierungsgrad von 2 bis 5 mit einer Isocyanatfunktionalität von 3 bis 7

bestehen, die B. bei 240°C bis 300°C in der Schmelze thermisch behandelt wurden.

Das cyclische, trimerisierte Isophorondiisocyanat sowie seine Oligomeren mit einem Oligomerisierungsgrad von 2 bis 5 und auch die Herstellung davon sind aus DE-C-2 325 826 bekannt. Bevorzugt eingesetzt wird das cyclische, trimerisierte Isophorondiisocyanat - Grundsätzlich können auch Gemische der genannten Verbindungen als Komponente B enthalten sein.

Die Produkte der Komponente B. sind in Mengen von 0,05 bis 2,5 Gew.-Teilen, vorzugsweise von 0,1 bis 1,5 Gew.-Teilen, bezogen auf 100 Gew.-Teile der Formmasse, enthalten.

Als Poly(alkylenterephthalate) werden neben Poly(propylen terephthalat) bevorzugt Poly(ethylenterephthalat) und Poly(butylenterephthalat) eingesetzt.

Bis zu 20 Mol-%, vorzugsweise 5 bis 15 Mol-%, der Terephthalsäure im Poly(alkylenterephthalat) können durch aromatische, cycloaliphatische oder aliphatische Dicarbonsäuren ersetzt werden. Beispiele geeigneten Dicarbonsäuren sind Isophthalsäure, Phthalsäure, Cyclohexan-1.4-dicarbonsäure, Adipinsäure, Sebazinsäure, Azelainsäure, Decandicarbonsäure o. ä.

Bis zu 20 Mol-%, vorzugsweise 5 bis 15 Mol-%, des Diols können durch aliphatische oder cycloaliphatische Diole wie beispielsweise Ethylenglykol, Propandiol-(1.3), Butandiol-(1.4), Hexndiol-(1.6), Neopentylglykol, 1.4-Dimethylolcyclohexan, Dodecandiol-(1.12) o, ä. ersetzt sein.

Unter dem Begriff Poly(alkylenterephthalat) werden auch Blockcopolyester gerechnet. Derartige Produkte werden z. B. in Chimia 28 (9), Seiten 544 bis 552 (1974) und in Rubber Chemistry and Technology 50, Seiten 688 bis 703 (1977) beschrieben. Diese Blockcopolyester enthalten neben den obengenannten aromatischen Dicarbonsäuren und Diolen ein Poly(oxyalkylen)diol mit einem Molgewicht im Bereich von etwa 600 bis 2 500. Bevorzugte Poly(oxyalkylen)-diole sind Poly(oxyethylen)diol, Poly(oxypropylen)diol und Poly(oxytetramethylen)diol. Der Anteil der Poly(oxyalkylen)-diole liegt im Bereich von 4 bis 40 Gew.-%, vorzugsweise von 10 bis 35 Gew.-% (bezogen auf den genannten Blockcopolyester).

Das erfindungsgemäß verwendete Poly(alkylenterephthalat) wird in üblicher Weise durch Um- oder Veresterung und anschließende Polykondensation von Terephthalsäure oder deren polyesterbildenden Derivaten sowie dem entsprechenden Diol in Gegenwart von Katalysatoren hergestellt (Sorensen und Campbell, Preparativ Methods of Polymer Chemistry, Interscience Publishers Inc., N.Y., 1961, Seiten 111 bis 127; Kunststoff-Handbuch, Band VIII, C. Hanser Verlag München, 1973, bzw. Journal of Polymer Science, Part A 1, 4, Seiten 1851 bis 1859, 1966).

Neben Homo- und Copolyestern können auch Polyestergemische eingesetzt werden, wobei die Mischungsverhältnisse für die Erfindung unkritisch sind.

Für die Herstellung der Formmassen geeignete Poly(alkylenterephthalte) (Komponente A.) weisen eine Viskositätszahl J von mindestens 50 cm³/g auf. Im Falle von Poly(ethylenterephthalat) als Ausgangsmaterial werden vorzugsweise Polyester mit einer Viskositätszahl J von 55 bis 75 cm³/g eingesetzt Bei den anderen Polyester typen werden vorzugsweise Produkte mit einer Viskositätszahl J von 80 bis 120 cm³/g als Ausgangsprodukte gewählt.

Zur Herstellung der erfindungsgemäßen Formmassen wird bei Raumtemperatur eine Mischung aus Poly(alkylenterephthalat) und Verbindungen gemäß Komponente B. hergestellt. Für die thermische Behandlung in der Schmelze wird üblicherweise ein (dis)kontinuierlich betriebener Kneter eingesetzt. Im allgemeinen beträgt die Behandlungszeit bei kontinuierlicher Arbeitsweise 1 bis 5 min und bei diskontinuierlicher Arbeitsweise 2 bis 20 min, wobei die Temperatur 240°C bis 300°C, bevorzugt 250°C bis 270°C, beträgt: Für Poly(ethylenterephthalate) liegt der bevorzugte Temperaturbereich bei 260°C bis 280°C.

Die in den erfindungsgemäßen Formmassen enthaltenen Poly(alkylenterephthalate) weisen im Falle von Poly(ethylenterephtpalat) eine Viskositätszahl J von >80 cm³/g, vorzugsweise von 90 bis 135 cm³/g auf. Bei den anderen Polyestertypen liegt die Viskositätszahl des Endproduktes bei >130 cm³/g, vorzugsweise bei 140 bis 180 cm³/g.

In die erfindungsgemäßen Formmassen können andere in der Polyestertechnologie übliche Polymere, wie z. B. Polyamide (Faserforsch. Textiltechn. 27 (2), 81 - 86 (1976)), Polyetheresteramide (DE-A-2 930 343), Polyetherester (US-A-4 317 764), funktionalisierte EPDM-Kautschuke (DE-A-2 622 876) eingearbeitet werden. Diese angeführten Mischungsbestandteile sind in den so erhaltenen Mischungen zu 1 bis 40, vorzugsweise 5 bis 25 Gew.-Teilen, enthalten.

Übliche Zusatz- und Hilfsstoffe wie Pigmente, Verarbeitungsmittel, Füll- und Verstärkungsstoffe, Hydrolyse-, Thermo- oder UV-Stabilisatoren können sowohl während der Herstellung als auch in die fertigen, behandelten Formmassen eingearbeitet werden.

Gegenüber entsprechenden Produkten des Standes der Technik weisen die erfindungsgemäßen Formmassen eine Reihe von Vorteilen auf: Sie sind bei der Herstellung einfacher zu handhaben, sie weisen keine Verfärbungen auf und zeigen keine Neigung zur Vernetzung.

Die Viskositätszahl (J) wurde nach DIN 16 779, Teil 2, an Lösungen von 0,5 g Poly(alkylenterephthalat) in 100 ml Phenol/o-Dichlorbenzol (50/50 Gew.-Teile) bei 25°C bestimmt.

Mit Buchstaben gekennzeichnete Versuche sind nicht erfindungsgemäß.-

**Beispiele**

**Beispiel 1**

50 g Homo-Poly(butylenterephthalat) (J = 110 cm³/g) werden mit der in der Tabelle angegebenen Menge Isophorondiisocyanat-Oligomeren (Isocyanatfunktionalität: 3,2) für 15 min in einem Laborkneter unter Stickstoffatmosphäre bei 250°C gemischt. Der jeweilige Anstieg der Viskositätszahl kann der Tabelle entnommen werden.

**Tabelle**

| Versuch | Isophorondiisocyanat [g] | J [cm³/g] |
|---|---|---|
| 1 | 0,06 | 130 |
| 2 | 0,125 | 137 |
| 3 | 0,25 | 151 |
| 4 | 0,5 | 182 |
| A | 1,5 | Gelanteile |

Die Produkte sind nicht verfärbt und blasenfrei.

**Beispiel 2**

990 g granuliertes Homo-Poly(butylenterephthalat) (J = 110 cm³/g) und 10 g Isophorondiisocyanat-Oligomeres (Isocyanatfunktionalität: 3,2) werden bei 22°C in einem Taumelmischer gemischt, Anschließend wird in einem Zweischneckenextruder bei 250°C (Verweilzeit: 2 min) extrudiert, Die so erhaltene Formmasse ist blasenfrei, unverfärbt und weist eine Viskositätszahl von 130 cm³/g auf.

**Beispiel 3**

600 g Homo-Poly(butylenterephthalat) (J = 110 cm³/g), 390 g Homo-Poly(ethylenterephthalat) (J = 72 cm³/g) sowie 15 g Isophorondiisocyanat-

Oligomeres (Isocyanatfunktionalität: 3,2) werden in einem Taumeltrockner bei 22°C gemischt. Anschließend wird in einem Zweischneckenextruder bei 255°C (Verweilzeit: 2 min) extrudiert. Die Formmasse ist blasenfrei, unverfärbt und weist eine Viskositätszahl von 113 cm$^3$/g auf.

## Patentansprüche

1. Formmassen auf Basis von hochmolekularen Poly(alkylenterephthalaten) mit einer Viskositätszahl J von >80 cm$^3$/g,
    dadurch gekennzeichnet,
    daß die Formmasse aus einer Mischung von

A.    Poly(alkylenterephthalat) mit einer Viskositätszahl J von mindestens 50 cm$^3$/g

und

B.    0,05 bis 2,5 Gew.-Teilen - bezogen auf 100 Gew.-Teile der Formmasse - cyclisches, trimerisiertes Isophorondiisocyanat oder ein Oligomeres davon mit einem Oligomerisierungsgrad von 2 bis 5 mit einer Isocyanatfunktionalität von 3 bis 7 besteht, die bei 240°C bis 300°C in der Schmelze thermisch behandelt wurde.
2. Formmasse gemäß Anspruch 1,
    dadurch gekennzeichnet,
    daß als Komponente B. das cyclische, trimerisierte Isophorondiisocyanat enthalten ist.
3. Formmasse gemäß Anspruch 1 und 2,
    dadurch gekennzeichnet,
    daß die Mischung neben der Komponente A. 0,1 bis 1,5 Gew.-Teile der Komponente B. - bezogen auf 100 Gew.-Teile der Formmasse - enthält.
4. Formmasse gemäß den Anspruch 1 bis 3,
    dadurch gekennzeichnet,
    daß die Mischung aus den Komponenten A. und B. bei 250°C bis 280°C in der Schmelze thermisch behandelt wurde.

## Claims

1. A moulding composition based on high-molecular poly(alkylene terephthalate) having a viscosity number J of >80 cm$^3$/g, characterized in that the moulding composition is composed of a mixture of

A.    poly(alkylene terephthalate) having a viscosity number J of at least 50 cm$^3$/g

and

B.    0.05 to 2.5 parts by weight - based on 100 parts by weight of the moulding composition - of cyclic, trimerized isophorone diisocyanate or an oligomer thereof having a degree of oligomerization of 2 to 5 and an isocyanate functionality of 3 to 7, which mixture has been heat-treated as a melt at 240°C to 300°C.
2. A moulding composition according to claim 1, characterized in that it contains cyclic trimerized isophorone diisocyanate as component B.
3. A moulding composition according to claim 1 and 2, characterized in that the mixture contains, in addition to to component A, 0.1 to 1.5 parts by weight of component B, based on 100 parts by weight of the moulding composition.
4. A moulding composition according to any of claims 1 to 3, characterized in that the mixture of components A and B has been heat-treated as a melt at 250°C to 260°C.

## Revendications

1. Masse à mouler à base de poly(alkylène-téréphtalates) de poids moléculaire élevé, possédant un indice de viscosité J supérieur à 80 cm$^3$/g,
    caractérisée par le fait que la masse à mouler est constituée d'un mélange

A.    de poly(akylène-téréphtalate) possédant un indice de viscosité J d'au moins 50 cm$^3$/g

et

B.    de 0,05 à 2,5 parties en poids - relativement à 100 parties en poids de la masse à mouler - d'un di-isocyanate cyclique trimérisé d'isophorone ou de l'un de ses oligomères possédant un degré d'oligomérisation de 2 à 5, avec une fonctionnalité isocyanate de 3 à 7,

et que l'on fait subir à ce mélange à l'état fondu un traitement thermique à une température de 240 à 300°C.
2. Masse à mouler selon la revendication 1, caractérisée par le fait que le di-isocyanate cyclique trimérisé d'isophorone est contenu comme composant B.
3. Masse à mouler selon les revendications 1 et 2, caractérisée par le fait que le mélange contient, en plus du composant A., de 0,1 à 1,5 partie en poids - relativement à 100 parties en poids de la masse à mouler - du composant B.
4. Masse à mouler selon les revendications 1 à 3, caractérisée par le fait que le mélange des composants A. et B. a subi un traitement thermique à l'état fondu à une température de 250 à 280°C.